Europäisches Patentamt

European Patent Office

Office européen des brevets

(19)

(11) Veröffentlichungsnummer: **0 132 835**
**A1**

(12) # EUROPÄISCHE PATENTANMELDUNG

(21) Anmeldenummer: 84108749.7

(22) Anmeldetag: 24.07.84

(51) Int. Cl.⁴: **B 26 F 1/40**

(30) Priorität: 27.07.83 DE 3327105

(43) Veröffentlichungstag der Anmeldung:
13.02.85 Patentblatt 85/7

(84) Benannte Vertragsstaaten:
AT BE CH FR GB IT LI NL

(71) Anmelder: Gebrüder Kömmerling Kunststoffwerke
GmbH
Zweibrückerstrasse 200
D-6780 Pirmasens(DE)

(72) Erfinder: Michel, Manfred, Dr. Dipl.-Chem.
Buchsweiler Strasse 75
D-6780 Pirmasens(DE)

(72) Erfinder: Themm, Jürgen
Herschberger Strasse 20
D-6784 Thaleischweiler(DE)

(72) Erfinder: Herz, Hermann
Zollstockstrasse 24
D-6780 Pirmasens-Erlenbrunn(DE)

(74) Vertreter: Sandmair, Kurt, Dr. Dr. et al,
Patentanwälte Dr. Berg Dipl.-Ing. Stapf Dipl.-Ing.
Schwabe Dr. Dr. Sandmair Postfach 86 02 45
Stuntzstrasse 16
D-8000 München 86(DE)

(54) Stanzunterlage und Verfahren zu ihrer Herstellung.

(57) Unterlage zum Stanzen oder Schneiden von Leder, Textilien, Gummi, Papier, Kunststoffen, Folien oder Blechen aus Metall und ähnlichen flächenhaften Materialien mit ein- oder mehrschichtigem Aufbau, die ganz oder teilweise aus einem vernetzten (gehärteten) Polyadditionsprodukt mit einer Shore-Härte D von 65 bis 85 besteht, und Verfahren zu ihrer Herstellung.

Die neue Stanzunterlage besitzt eine bessere Dämpfungswirkung und erbringt eine höhere Stanzleistung als die bisher bekannten Stanzunterlagen. Da sie nicht materialabhebend nachgerichtet werden muß) kann sie einfach und rasch beliebig oft renoviert werden und ist damit praktisch unbegrenzt haltbar.

EP 0 132 835 A1

B e s c h r e i b u n g

Die Erfindung betrifft eine verbesserte Unterlage zum Stanzen oder Schneiden von Leder, Textilien, Gummi, Papier, Kunststoff, Folien oder Blechen aus Metall oder ähnlichen flächenhaften Materialien mit einem ein- oder mehrschichtigen Aufbau, die ganz oder teilweise aus einem Kunststoff besteht, die eine bessere Dämpfungswirkung besitzt und eine höhere Stanzleistung erbringt als die bisher bekannten Stanzlunterlagen und, da sie nicht materialabhebend nachgerichtet werden muß, beliebig oft einfach und rasch renoviert werden kann und damit praktisch unbegrenzt hatlbar ist.

Zum Ausstanzen von Leder, lederähnlichen Materialien, Textilien, Gummi, Papier, Kunststoffen, Metallfolien, Blechen und dergleichen mittels Stanzvorrichtungen und entsprechenden Stanzwerkzeugen und auch zum Ausstanzen von Hand sowie zum Zuschneiden benötigt man bekanntlich Unterlagen, sogenannte Stanzklötze oder Stanzblöcke, an die bestimmte Anforderungen gestellt werden :

So muß der Werkstoff, aus dem diese Unterlagen bestehen, so beschaffen sein, daß das Stanzmesser, das in das Material eindringt, mit verhältnismäßig geringem Aufwand wieder herausgezogen werden kann. Dabei dürfen keine Schnittkanten entstehen, die sich auf die nachfolgenden Stanzvorgänge störend auswirken können. Die Stanzunterlagen dürfen einerseits nicht zu spröde sein, damit die Schnittkanten nicht zu früh ausbrechen, andererseits dürfen sie auch nicht zu weich sein, damit sie sich nicht zu sehr aufwerfen und damit eine unruhige Oberfläche schaffen. Auch hängt die Qualität des Stanzergebnisses meist sehr stark von den mechanischen Eigenschaften der Stanzunterlage ab; sehr dünne und elastische Werkstoffe stanzen sich leichter und an den Rändern sauberer auf härteren Unterlagen, dickere und härtere Werkstoffe werden gunstiger auf weicheren Unterlagen gestanzt. Außerdem muß die Stanzunterlage einen dämpfenden Effekt besitzen, damit die beim Stanzvorgang auftretenden harten Stöße amortisiert werden.

Eine Stanzunterlage, die allen oben angegebenen Anforderungen genügt, ist bisher jedoch nicht bekannt.

Früher verwendete man Stanzunterlagen aus verschiedenen Holzarten, die jedoch den Nachteil haben, daß wegen des erforderlichen Dämpfungseffektes diese Unterlagen sehr dick (etwa 10 bis 20 cm) sein müssen und daher sehr unhandlich sind. Außerdem wird das Holz auf der Stanzoberseite sehr schnell stark beschädigt und muß daher oft nachgerichtet werden.

Aus diesem Grunde versieht man seit etwa 25 Jahren derartige Stanzunterlagen mit einer Kunststoffschicht, beispielsweise aus einem thermoplastischen Polymeren, wie z.B. einem Polyamid oder einem Polyolefin. Damit wird zwar eine bessere Widerstandsfähigkeit der Oberflächen erreicht, es verbleiben aber bestimmte Nachteile : Die Stanzunterlagen verhalten sich zwar im Stanzverhalten gegenüber bestimmten Werkstoffen optimal, gegenüber anderen aber nicht und können an andere Werkstoffe nicht angepaßt werden. Ferner müssen sie jeweils nach einigen tausend Stanzvorgängen (in der Praxis etwa alle vier Wochen) spanabhebend nachgerichtet (d.h. repariert) werden, wobei jedesmal eine Schicht von etwa 3 bis 5 mm abgenommen werden muß. Das bedeutet, daß eine Stanzunterlage einer Dicke von 50 mm in der Regel schon nach etwa einem halben Jahr verbraucht ist.

Eine Reparatur derartiger Stanzunterlagen zum Zwecke ihrer Wiederverwendung war bisher auch nicht möglich, da kein Material gefunden werden konnte, das sich mit den Werkstoffen der Stanzunterlage so gut verbindet, daß eine Wiederverwendung möglich gewesen wäre. Es wurden zwar bereits verschiedene Kunststoffe vorgeschlagen (vergleiche DE-PS 806 272 und DE-PS 873 436), damit konnten die vorstehend beschriebenen Nachteile jedoch nicht eliminiert werden.

Ein weiterer Nachteil der bisher verwendeten Stanzunterlage besteht darin, daß die Klötze infolge der vielen Stanzvorgänge allmählich plastisch verformt werden, d.h. "wachsen", so daß die Stanzeinschnitte auseinanderklaffen, was zu unsauberen Stanzungen führt. Zwar hat man versucht, dieser unerwünschten Verformung durch Einbringen verstärkender Lagen zu begegnen, in der Praxis zeigte sich jedoch, daß derartige verstärkende Lagen bei der materialabhebenden Nachbehandlung freigelegt werden und somit eine Weiterverwendung der Unterlage unmöglich gemacht wird.

Aufgabe der Erfindung war es daher, eine Stanzunterlage zu schaffen, die allen oben genannten Anforderungen genügt und insbesondere an die jeweiligen Eigenschaften der zu stanzenden Werkstoffe angepaßt werden kann.

Es wurde nun gefunden, daß erfindungsgemäß diese Aufgabe dadurch gelöst werden kann, daß man die Unterlage zum Stanzen oder Schneiden von Leder, Textilien, Gummi, Papier, Kunststoffen, Folien oder Blechen aus Metall und ähnlichen flächenhaften Materialien mit einem ein- oder mehrschichtigen Aufbau ganz oder teilweise aus einem vernetzten (gehärteten) Polyadditionsprodukt mit einer Shore-Härte D von 65 bis 85, vorzugsweise von 70 bis 75 oder 80 bis 85, fertigt. Eine solche Stanzunterlage wird erfindungsgemäß hergestellt durch Einbringen eines vernetzenden bzw. härtenden Mehrkomponenten-Kunststoffgemisches, in der Regel Zweikomponenten-Kunststoffgemisches, in eine entsprechende Form, wobei durch Variieren sowohl der Reaktionspartner in ihrem chemischen Aufbau als auch des Vernetzungsgrades sowohl das Schnittverhalten als auch das Dämpfungsverhalten weitgehend verändert und an die Erfordernisse des Stanzgutes angepaßt werden können.

Gegenstand der Erfindung sind Unterlagen zum Stanzen oder Schneiden mit dem in den Ansprüchen 1 bis 4 angegebenen Aufbau.

Gegenstand der Erfindung sind ferner Verfahren zur Herstellung solcher Unterlagen zum Stanzen oder Schneiden, wie sie in den Ansprüchen 6 und 7 gekennzeichnet sind.

Als vernetzende bzw. härtende Kunstharze kommen erfindungsgemäß in Betracht :

1) Polyester- und Polyätherole, die mit Isocyanaten aller Art reagieren. Sie können sowohl durch Variieren ihres Molekulargewichtes als auch ihrer Molekülstruktur und durch Zugabe anderer mehrwertiger Alkohole, beispielsweise von Glycerin, Rizinusöl und dergleichen, Füllstoffen, Weichmachern und dergleichen, modifiziert und dadurch in ihren mechanischen Eigenschaften weitgehend variiert werden. Erforderlichenfalls kann die Vernetzungs- bzw. Aushärtungsgeschwindigkeit dieser Systeme durch Zugabe eines Beschleunigers als dritte Komponente, wie z.B. Dibutylzinnlaurat, erheblich erhöht werden.

Erfindungsgemäß bevorzugt verwendbar sind äther- und/oder estergruppenhaltige Polyole mit einem OH-Gruppengehalt von 4,5 bis 14%, vorzugsweise von 4,5 bis 7%, einer Säurezahl von 0 bis 3 mg KOH/g, vorzugsweise von 2 bis 3 mg KOH/g, und einer Viskosität bei 20°C von 3000 bis 15000 mPa.s, vorzugsweise von 3000 bis 7000 mPa.s. Besonders bevorzugt ist ein verzweigter, äther- und estergruppenhaltiger Polyalkohol mit einem OH-Gruppengehalt von etwa 5%, einer Säurezahl von 2 mg KOH/g und einer Viskosität bei 20°C von etwa 5000 mPa.s.

Erfindungsgemäß geeignet sind auch verzweigte äthergruppenhaltige Polyole mit einem OH-Gruppengehalt von 7 bis 22%, vorzugsweise von 11 bis 22%, einer Säurezahl von 0 bis 0,5 mg KOH/g, vorzugsweise von 0 mg KOH/g, und einer Viskosität bei 20°C von 50 bis 1600 mPa.s, vorzugsweise von 50 bis 750 mPa.s, die als Modifizierungsmittel verwendet werden können. Besonders bevorzugt ist ein ver-zweigter äthergruppenhaltiger Polyalkohol aus Trimethylol-propan und Propylenoxid (1,2 Epoxypropan) mit einem mittleren Molekulargewicht von 450 und einem OH-Gruppengehalt von etwa 11,5%, einer Säurezahl von < 0,5 mg KOH/g und einer Viskosität bei 20°C von etwa 750 mPa.s.

2) Epoxidverbindungen, beispielsweise die Additionsprodukte von Bisphenol A und Epichlorhydrin, die mit Aminen, Polyamidoaminen und dergleichen reagieren. Sie können wie unter 1) angegeben modifiziert und variiert werden. Erforderlichenfalls kann auch hier die Vernetzungs- bzw. Aushärtungsgeschwindigkeit durch Zugabe eines Beschleunigers als dritte Komponente, beispielsweise einer Aminverbindung, wie Rütapox VP 2826, erhöht werden.

3) Polymerisationssysteme, wie Acrylate und ungesättigte Polyester, die in bekannter Weise peroxidisch vernetzt werden können. Sie können wie unter 1) angegeben modifiziert und variiert werden. Erforderlichenfalls kann auch hier die Vernetzungs- bzw. Aushärtungsgeschwindigkeit durch Zu-gabe bekannter Polymerisationsbeschleuniger wie Kobalt-oktoat oder tertiäre Amine in bekannter Weise erhöht werden.

Bei der Herstellung der erfindungsgemäßen Stanzunterlage ist es sehr leicht möglich, eine oder mehr Verstärkungslagen, beispielsweise Gewebe aus Glasfasern, Kunststoff oder Metall, einzubringen. Da die erfindungsgemäßen Stanzunterlagen nicht materialabhebend nachgerichtet werden müssen, sind derartige Verstärkungen nicht störend und können außerdem an der mechanisch geeigneten Stelle, beispielsweise knapp unterhalb der Stanzoberfläche, eingebaut werden.

Die erfindungsgemäße Stanzunterlage kann auf ihrer Unterseite mit einem Antirutschbelag oder mit einem Haftklebstoff ausgerüstet werden, um unerwünschte Bewegungen während und zwischen den Stanzvorgängen, beispielsweise durch Materialtransport, zu vermeiden.

Erforderlichenfalls kann zur Erzielung einer noch besseren Dämpfung die Stanzunterlage aus zwei oder mehr Schichten aufgebaut sein, wobei die Schichten vorzugsweise einen unterschiedlichen Elastizitätsmodul aufweisen. Die darunterliegende Schicht hat insbesondere einen niedrigeren Elastizitätsmodul.

Es besteht auch die Möglichkeit, die erfindungsgemäße Stanzunterlage direkt auf die Oberfläche des Stanztisches der Stanzvorrichtung aufzugießen und aushärten zu lassen, um sie so fest und dauerhaft mit der Stanzvorrichtung zu verbinden. Wegen der räumlichen chemischen Vernetzung sind derartige Unterlagen in ihrer Stanzleistung und wegen ihrer höheren Elastizität in ihrer Dämpfungswirkung den bisher bekannten Stanzunterlagen weit überlegen.

Ein entscheidender Vorteil der erfindungsgemäßen Stanzunterlagen besteht darin, daß sie beliebig oft reparabel sind. Wenn die Oberfläche einer erfindungsgemäßen Stanzunterlage durch eine entsprechende Anzahl von Stanzvorgängen unbrauchbar geworden ist, braucht sie nicht, wie bei allen bisher bekannten Stanzunterlagen, spanabhebend durch Schleifen oder dergleichen nachgerichtet zu werden. Durch Aufgießen einer dünnen, mittelviskosen, selbstverlaufenden Schicht mit einer Dicke von 1 bis 2 mm eines vernetzenden bzw. härtenden 2- oder Mehrkomponenten-Reaktionsharzes erhält die Stanzunterlage in kürzester Zeit wieder ihre ursprüngliche Oberfläche und kann wieder wie eine neue Stanzunterlage verwendet werden. Dieser Vorgang

kann beliebig oft wiederholt werden und die auf diese Weise jeweils renovierte Platte hat praktisch die gleiche Lebensdauer wie eine neue Unterlage. Daraus ergeben sich für den Benutzer wesentliche wirtschaftliche Vorteile :

a) Er muß nicht ständig neue Stanzunterlagen kaufen,

b) während bisher für jede Stanzvorrichtung in der Regel zwei Stanzklötze benötigt wurden (während der eine in Betrieb war, wurde der andere abgerichtet, d.h. repariert), kann die Reparatur bei der erfindungsgemäßen Stanzunterlage nach Arbeitsende innerhalb weniger Minuten durchgeführt werden und am nächsten Morgen steht eine neue Stanzunterlage zur Verfügung.

Die aufzugießende Schicht besteht in der Regel aus einem chemisch gleichen oder ähnlichen Material, das sich mit der Unterlage zu einer Einheit chemisch verbindet.

Ein weiterer wesentlicher Vorteil der erfindungsgemäßen Stanzunterlage besteht jedoch darin, daß man als aufzugießendes Kunstharz unterschiedlich formulierte Produkte verwenden kann, beispielsweise solche, die je nach Formulierung eine härtere, weichere oder elastischere Oberfläche ergeben. Damit ist dem Anwender die Möglichkeit gegeben, seine Stanzunterlage dem jeweils zu stanzenden Material innerhalb kürzester Frist optimal anzupassen.

In der Praxis verfährt man dabei so, daß man dem Anwender mehrere unterschiedliche Sorten, beispielsweise der Komponente A eines Reaktions-Kunstharzes zur Verfügung stellt, und zwar in der für die einzelnen Größen der Stanzunterlagen entsprechend abgepackten Menge. Diese Komponenten A tragen die jeweils charaktisierende Bezeichnung (z.B. weich, mittelhart, hart, hochelastisch und dergleichen). Als härtende Komponente B wird in der Regel immer das gleiche Produkt verwendet. Der Anwender mischt nun die beiden Komponenten und gießt das Reaktionsharz sofort auf die Stanzunterlage. Aufgrund seiner rheologischen Eigenschaften verteilt sich das Kunstharz von selbst auf der Oberfläche der Stanzunterlage gleichmäßig und völlig eben. Bei sorgfältiger Arbeitsweise ist dabei noch nicht einmal das Anbringen einer Randabgrenzung erforderlich, die jedoch unter Verwendung eines selbstklebenden Streifens oder mittels eines beweglichen Rahmens erforderlichenfalls jederzeit angebracht werden kann.

Je nach dem verwendeten System ist nach 2 bis 3 Tagen, bei Verwendung entsprechender Beschleuniger schon nach wenigen Stunden (beispielsweise über Nacht), bei Normaltemperatur das Kunstharz vernetzt bzw. ausgehärtet und die Stanzunterlage damit gebrauchsfertig. Durch Anwendung von Wärme, beispielsweise mit einem Infrarotstrahler, kann die Vernetzungs- bzw. Aushärtungszeit bis auf wenige Minuten abgekürzt werden.

Die erfindungsgemäßen Unterlagen zum Stanzen und Schneiden aus einem vernetzten bzw. gehärteten Polyadditionsprodukt bieten daher gegenüber den bekannten Stanzunterlagen, insbesondere solchen, die ganz oder teilweise aus Kunststoff bestehen, die folgenden Vorteile :

- Sie erbringen eine höhere Stanzleistung,
- sie besitzen eine bessere Dämpfungswirkung,
- sie brauchen nicht materialabhebend gerichtet (repariert) zu werden,
- sie können beliebig oft, einfach und rasch vom Anwender selbst renoviert werden und sind damit praktisch unbegrenzt haltbar,
- in ihren mechanischen Eigenschaften können sie dem zu stanzenden Material innerhalb kurzer Zeit optimal angepaßt werden und
- die Stanzkosten werden dadurch verringert.

Die Erfindung wird durch die folgenden Beispiele näher erläutert, ohne jedoch darauf beschränkt zu sein.

Beispiel 1

In eine den gewünschten Maßen, in diesem Falle 90 cm x 75 cm x 3 cm, entsprechende Holzform, die innen mit silikonisiertem Papier ausgerüstet war, wurde ein Gemisch eingebracht aus

Komponente A

85% verzweigter, äther- und estergruppenhaltiger Polyalkohol mit OH-Gruppengehalt von 5%, Säurezahl 2 mg KOH/g, Viskosität bei 20°C von 5000 mPa.s,

8% verzweigter, äthergruppenhaltiger Polyalkohol aus Trimethylolpropan und Propylenoxid (1,2 Epoxypropan) mit einem mittleren Molekulargewicht von 450 und einem OH-Gruppengehalt von 11,5%, einer Säurezahl < 0,5 mg KOH/g und einer Viskosität bei 20°C von 750 mPa.s,

7% Alkali-Aluminosilikat.

Komponente B

4,4-Diphenylmethandiisocyanat (NCO-Gruppengehalt 31%) im Gewichtsverhältnis 2,5 : 1.

Das Gemisch vernetzte bei Raumtemperatur innerhalb von 48 Stunden zu einem vernetzten bzw. gehärteten Kunstharz mit einer Shore-D-Härte von 70.

Nach dem Entformen wurde die auf diese Weise hergestellte Stanzunterlage in einer Stanzmaschine praktisch erprobt, wobei besonders aggressive Stanzmesser mit vielen Lochpfeifen verwendet wurden. Nach etwa 45000 Stanzungen war die Oberfläche noch in einem wesentlich besseren Zustand als bei den bekannten Stanzunterlagen. Auch das Dämpfungsverhalten war spürbar besser. Nach weiteren etwa 20000 Stanzungen wurde die inzwischen rauh und unregelmäßig gewordene Oberfläche mit einer Bürste von Hand abgebürstet, um den Staub zu entfernen.

Anschließend wurde die Stanzunterlage renoviert. Zu diesem Zweck wurde auf die abgebürstete Oberfläche der Stanzunterlage ein Gemisch gegossen aus

Komponente A

40% verzweigter, äther- und estergruppenhaltiger Polyalkohol mit einem OH-Gruppengehalt von 5%, einer Säurezahl von 2 mg KOH/g einer Viskosität bei 20°C von 5000 mPa.s,

13% verzweigter äthergruppenhaltiger Polyalkohol mit einem OH-Gruppengehalt von 11,5%, einer Säurezahl < 0,5 mg KOH/g und einer Viskosität bei 20°C von 750 mPa.s, 9% Alkali-Aluminosilikat,

38% Magnesiumkaliumaluminiumsilikat

Komponente B

4,4-Diphenylmethandiisocyanat (NCO-Gehalt 31%) im Gewichtsverhältnis 3 : 1 0,1% Beschleuniger

Diese Masse breitete sich zu einem gleichmäßigen, eben verlaufenden Film einer Dicke von 2 mm aus, der innerhalb von 4 bis 6 Stunden aushärtete und sich mit der Stanzunterlage chemisch fest verband. Er besaß eine Shore-D-Härte von 75.

Mit dieser renovierten Stanzunterlage wurde sehr dünnes Stretch-Leder im praktischen Einsatz gestanzt. Dabei zeigte sich, daß die gestanzten Teile schärfere, weniger ausgefranste Ränder besaßen als mit einer herkömmlichen Stanzunterlage. Mit dieser renovierten Stanzunterlage wurden wiederum etwa 45000 Stanzungen durchgeführt und dabei zeigte sie die gleiche mechanische Standfestigkeit und Belastbarkeit wie die ursprünglich hergestellte neue Stanzunterlage.

Danach wurde die Stanzunterlage noch mehrere Male mit der gleichen Kunstharzmischung beschichtet, wobei lediglich die Shore-D-Härte durch Veränderung des Verhältnisses von Polyester- und Polyätherol variiert wurde. Immer wieder zeigte sich, daß die Widerstandsfähigkeit der neu aufgebrachten Schicht mit der ursprünglichen Schicht vergleichbar war und keinerlei Ablösungserscheinungen auftraten. Die unterschiedlichen Shore-D-Härten waren jeweils für einen oder mehrere der zu stanzenden Werkstoffe hinsichtlich der Stanzbarkeit besonders günstig.

Beispiel 2

Wie im Beispiel 1 angegeben, wurde in eine vorbereitete Form eine Mischung gegossen aus

Komponente A

45% Rütapox 0164
45% Rütapox 0273
 9% Rütapox-Reaktiv-Verdünner S (niedrig-viskoser Glycidyläther)
 1% Levopox L 2275

Komponente B

66% Rütapox 325

Auch die in diesem Beispiel hergestellte Stanzunterlage konnte mehr als 60000 Stanzvorgängen ausgesetzt werden, bevor ihre Oberfläche rauh und unregelmäßig wurde.

Diese Oberfläche konnte wie in Beispiel 1 renoviert werden, wobei ähnlich gute Ergebnisse wie im Beispiel 1 erzielt wurden.

— · —

Patentansprüche

1. Unterlage zum Stanzen oder Schneiden von Leder, Textilien, Gummi, Papier, Kunststoffen, Folien oder Blechen aus Metall und ähnlichen flächenhaften Materialien mit einem ein- oder mehrschichtigen Aufbau, die ganz oder teilweise aus Kunststoff besteht, dadurch gekennzeichnet, daß es sich bei dem Kunststoff um ein vernetztes (gehärtetes) Polyadditionsprodukt mit einer Shore-Härte D von 65 bis 85, vorzugsweise von 70 bis 75 oder von 80 bis 85, handelt.

2. Unterlage nach Anspruch 1, dadurch gekennzeichnet, daß es sich bei dem vernetzten (gehärteten) Polyadditionsprodukt handelt um das Produkt der Umsetzung zwischen

a) 30 bis 95%, vorzugsweise 80 bis 90%, eines äther- und/oder estergruppenhaltigen Polyols mit einem OH-Gruppengehalt von 4,5 bis 14%, vorzugsweise 4,5 bis 7%, einer Säurezahl von 0 bis 3 mg KOH/g, vorzugsweise 2 bis 3 mg KOH/g, und einer Viskosität bei 20°C von 3000 bis 15000 mPa.s, vorzugsweise 3000 bis 7000 mPa.s;

b) einem Di- und/oder Polyisocyanat mit einem NCO-Gruppengehalt von 21 bis 33%, vorzugsweise von 30 bis 33%, in jeweils stöchiometrischem Verhältnis als Härter;

c) gegebenenfalls 0 bis 20%, vorzugsweise 5 bis 15%, eines verzweigten äthergruppenhaltigen Polyols mit einem OH-Gruppengehalt von 7 bis 22%, vorzugsweise 11 bis 22%, einer Säurezahl von 0 bis 0,5 mg KOH/g, vorzugsweise 0 mg KOH/g, und einer Viskosität bei 20°C von 50 bis 1600 mPa.s, vorzugsweise 50 bis 750 mPa.s, als Modifizierungsmittel;

d) 2 bis 10%, vorzugsweise 3 bis 8%, Trocknungsmittel, insbesondere Alkalialuminosilikat, speziell Zeolith;

e) gegebenefalls 0 bis 10%, vorzugsweise 0 bis 3%, mehrwertige Alkohole, vorzugsweise 1,4-Butandiol, 2,5-Hexandiol und Rizinusöl;

f) gegebenenfalls 0 bis 0,5%, vorzugsweise 0 bis 0,1%, eines Härtungsbeschleunigers, vorzugsweise Dibutylzinndilaverat und

g) gegebenenfalls 0 bis 50%, vorzugsweise 0 bis 10%, eines üblichen inerten, vorzugsweise mineralischen Füllstoffs, Stabilisators oder dergleichen.

3. Unterlage nach Anspruch 1, dadurch gekennzeichnet, daß es sich bei dem vernetzten (gehärteten) Polyadditionsprodukt um das Produkt der Umsetzung handelt zwischen

a) 10 bis 95%, vorzugsweise 30 bis 60%, eines unmodifizierten, flüssigen Standard-Epoxidharzes auf Bisphenol-A-Basis;

b) einem aliphatischen Polyamin, vorzugsweise Rütapox H 105 (Aminäqivalent 92) oder H 91, oder einem cycloaliphatischen Polyamin, vorzugsweise VE 3285 (Aminäqivalent 80), oder einem Polyamidoamin, vorzugsweise DF 325 (Aminäquivalent 120), in jeweils stöchiometrischem Verhältnis als Härter;

c) 0 bis 100%, vorzugsweise 60 bis 30%, eines flexibilisierten flüssigen Epoxidharzes;

d) gegebenefalls 0 bis 20%, vorzugsweise 0 bis 10% eines epoxidgruppenhaltigen bi- oder monofunktionellen Reaktiv-Verdünners, insbesondere 1,6-Hexandioldiglycidyläther und 2-Äthylhexylglycidyläther;

e) gegebenefalls 1 bis 5%, vorzugsweise 3%, eines Reaktionsbeschleunigers, wie Salicylsäure, Rütapox VP 2826 oder Levopox L 2275;

f) gegebenefalls 0 bis 40%, vorzugsweise 10 bis 20%, flexibilisierende Zusätze, vorzugsweise eines flüssigen

Acrylnitrilpoylmeren mit endständigen Aminogruppen, einem Acrylnitrilgehalt von etwa 16% und einem Amin-Äquivalentgewicht von 800 bis 1000, insbesondere Hycar 1300 x 16; und

g) gegebenenfalls inerten mineralischen Füllstoffen, vorzugsweise Kreide und Quarzmehl, in einer Menge von bis zu 50%, bezogen auf die Mischung aller übrigen Bestandteile.

4. Unterlage nach einem der Ansprüche 1 bis 3, dadurch gekennzeichnet, daß sie aus zwei Schichten besteht, von denen die untere Schicht einen niedrigeren Elastizitätsmodul aufweist.

5. Unterlage nach einem der Ansprüche 1 bis 4, dadurch gekennzeichnet, daß sie mindestens eine Lage eines geeigneten Verstärkungsmaterials, vorzugsweise eines Gewebes aus Glasfasern, Kunststoff oder Metall, aufweist.

6. Verfahren zur Herstellung der Unterlage nach einem der Ansprüche 1 bis 5, dadurch gekennzeichnet, daß man eine Mischung der zur Herstellung des vernetzten (gehärteten) Polyadditionsprodukts verwendeten Ausgangsmaterialien in eine Form mit den gewünschten Maßen, vorzugsweise eine mit silikonisiertem Papier ausgeschlagene Holzform, gießt und nach dem Aushärtenlassen bei Raumtemperatur oder erhöhter Temperatur aus der Form herausnimmt.

7. Verfahren nach Anspruch 6, dadurch gekennzeichnet, daß man die Ausgangsmischung oder eine in ihrer Härte dem vorgesehnen Verwendungszweck angepaßte Mischung auf eine Stanzunterlage mit abgenutzter Oberfläche oder direkt auf die Oberfläche des Stanztisches der Stanzvorrichtung aufgießt und aushärten läßt.

**Europäisches Patentamt**

**EUROPÄISCHER RECHERCHENBERICHT**

0132835
Nummer der Anmeldung

## EINSCHLÄGIGE DOKUMENTE

EP 84108749.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.X)4 |
|---|---|---|---|
| A | AT - B - 264 276 (NOBEL) <br> * Gesamt * <br> -- | 1 | B 26 F 1/40 |
| A | DE - A1 - 2 805 002 (MIWA) <br> * Anspruch 1; Seiten 3,4 * <br> ---- | 1 | |

|  |  |
|---|---|
| | RECHERCHIERTE SACHGEBIETE (Int. Cl.X)4 |
| | B 26 F <br> B 26 D |

Der vorliegende Recherchenbericht wurde für alle Patentansprüche erstellt.

| Recherchenort | Abschlußdatum der Recherche | Prüfer |
|---|---|---|
| WIEN | 19-09-1984 | HOFMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82